(19) Europäisches Patentamt / European Patent Office / Office européen des brevets

(11) **EP 2 639 482 B1**

(12) **EUROPEAN PATENT SPECIFICATION**

(45) Date of publication and mention
of the grant of the patent:
**24.10.2018 Bulletin 2018/43**

(51) Int Cl.:
**F16K 17/30** *(2006.01)*

(21) Application number: **10859515.8**

(86) International application number:
**PCT/JP2010/006586**

(22) Date of filing: **10.11.2010**

(87) International publication number:
**WO 2012/063283 (18.05.2012 Gazette 2012/20)**

(54) **CONSTANT FLOW CONTROL DEVICE**

KONSTANTER FLUSSREGLER

DISPOSITIF DE COMMANDE D'ÉCOULEMENT CONSTANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.09.2013 Bulletin 2013/38**

(73) Proprietor: **Fuji Bellows Co., Ltd
Yamato-shi, Kanagawa 242-0012 (JP)**

(72) Inventors:
• **KOJIMA, Hiroki
Yamato-shi
Kanagawa 242-0012 (JP)**
• **OGURI, Takeo
Yamato-shi
Kanagawa 242-0012 (JP)**

• **NAKAMURA, Takanobu
Yamato-shi
Kanagawa 242-0012 (JP)**
• **SUZUKI, Takatomo
Yamato-shi
Kanagawa 242-0012 (JP)**

(74) Representative: **Plougmann Vingtoft a/s
Rued Langgaards Vej 8
2300 Copenhagen S (DK)**

(56) References cited:
WO-A1-2010/013412        JP-A- 7 190 204
JP-A- 2000 213 660        JP-A- 2008 232 196
JP-A- 2008 232 196        JP-U- H03 187
JP-U- 63 133 674          US-B1- 6 220 571

**Description**

Technical Field

The present invention relates to a constant flow control device (constant flow control valve) and, in particular, to a constant flow control device capable of accurately and stably controlling the flow rate of fluid even when the flow rate is within a small flow rate range.

Background Art

A constant flow control device B in which a needle valve portion 42 is integrally formed at a movable valve body 5 that divides a first chamber 6 and a second chamber 10 is known as a conventional constant flow control device (also referred to as a constant flow control valve device) as the principle is illustrated in Fig. 11 (for example, see Patent Literature 1). A similar device is disclosed in WO 2010/013412, which document forms the basis of the preamble of claim 1.

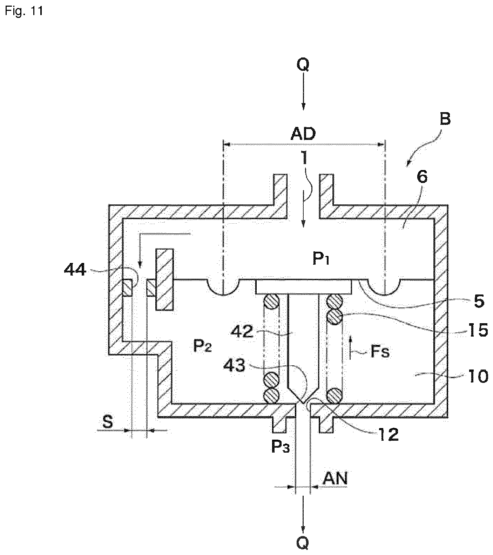

Note that the relationship between the flow rate at a constant flow control valve and the size of an orifice that is a throttle portion (or a throttle portion element) (the passage section of the orifice) in the constant flow control device will be described with reference to the principle illustrated in Fig. 11.

As described in Fig. 11, it is commonly known that the following expression holds when the first chamber 6 has a fluid pressure P1, the second chamber 10 has a fluid pressure P2, a fluid passed through a valve seat 43 has a pressure P3, the movable valve body 5 has an effective pressure receiving area AD, a coil spring has a spring load FS, an orifice 44 has a passage section S, and an outlet passage 12 (the valve seat 43) has an effective sectional area AN.

When P1 · AD = P2 · (AD - AN) + P3 · AN + FS (P1 - P2) · AD = FS - (P2 - P3) · AN P1 - P2 = $\Delta$P,

$$\Delta P = P1 - P2 = (FS - (P2 - P3) \cdot AN)/AD$$

$$= FS/AD - AN/AD \cdot (P2 - P3) \text{ holds.}$$

Here, the term AN/AD can be ignored when AN is smaller enough than AD. Further, when the displacement of FS is small, FS/AD = const can hold.

Therefore,

$$\Delta P \approx FS/AD = const \text{ holds.}$$

Thus, the flow rate Q = kS($\Delta$P)1/2 = const k: the proportional constant
The flow rate Q oc S($\Delta$P)1/2 oc S is obtained.

In other words, the flow rate Q is a constant flow rate (const) and bears a proportional relationship to the passage section S of the orifice 44. Thus, when the small flow rate is controlled at a constant flow rate, the passage section S of the orifice 44 is small.

Citation List

Patent Literature

   Patent Literature 1: JP 2008-232196 A
   Patent Literature 2: JP 08-249069 A

Summary of Invention

Technical Problem

At that case, when taking into consideration of the state where a water pressure is applied to the first chamber 6 in order to start passing water on the assumption that fluid is discharged from the outlet of the constant flow control valve into the air and the fluid is water (the following are the same as above), the movable valve body 5 moves from the first chamber 6 to the second chamber 10 side such that the needle valve 42 appropriately throttles the flow with the valve seat 43 in order to control the momentary flow rate discharged from the constant flow control valve device B at a predetermined flow rate. At that time, the excessive momentum possibly causes the needle valve 42 to collide with the valve seat 43 because the movable valve body 5 relatively momentarily moves.

Especially, when a pressure larger than a predetermined differential pressure between the first chamber 6 and the second chamber 10 prescribed according to a load set at a main elastic member 15 is applied to the first chamber 6 while an air bubble exists in the second chamber 10, the movable valve body 5 moves until the needle valve 42 collides with the valve seat 43. Then, the needle valve 42 is closed until the differential pressure between the first chamber 6 and the second chamber 10 ($\Delta P$) becomes the predetermined differential pressure. After the differential pressure between the first chamber 6 and the second chamber 10 becomes the predetermined differential pressure, the needle valve 42 is controlled to be at a position in such a way as to appropriately throttle the flow.

The reason comes from the following mechanism.

When the differential pressure $\Delta P$ is controlled at a predetermined pressure, the size (volume) of the initially existed air bubble should become small at the pressure of the second chamber 10 (applying a water pressure to the constant flow control valve device should decrease the volume of the gas as the volume of the gas is inversely proportional to the increase in pressure in accordance with the Boyle-Charle's law). Thus, water corresponding to the decrease in the size of the air bubble should have been supplied from the first chamber 6 toward the second chamber 10 through the orifice 44 after the water pressure has been applied. However, the flow rate (Cv value) at the orifice is small, for example, the orifice 44 of the constant flow control valve have a very small hole in order to control a small flow rate. Thus, when a water pressure is applied to the first chamber 6, the supply of water from the first chamber 6 toward the second chamber 10 through the orifice 44 tends to be late. During the delay, the movable valve body 5 receives the water pressure applied to the first chamber 6 and the valve seat 43 concentrically supports the water pressure through the needle valve 42.

From the above-mentioned reasons, the needle valve 42 repeatedly collides with the valve seat 43 every time when passing water is started. The force of the collision is generated by the differential pressure $\Delta P$ applied to the movable valve body 5 having a relatively larger pressure receiving area in comparison with the diameter of the needle valve 42. Thus, the larger the pressure supplied to the first chamber 6 is, the larger the force of the collision concentrically works on the needle valve 42 and the valve seat 43.

Within the range of the prior arts, this tends to cause problems in that the needle valve 42 is engaged in the valve seat 43 and is locked, in that the needle valve 42 is worn or broken, and in that the valve seat 43 is worn or deformed. The prior arts have problems on the stability and reliability of the performance as a constant flow control valve device.

In light of the foregoing, it can be considered that the needle valve 42 as a tip is separated from the movable valve body 5 in such a way as to become a movable needle. However, the component placement needs to reasonably be designed, or the structure becomes complicated and the cost becomes high.

Further, a constant flow control valve device that controls a small flow rate, for example, of a level as one milliliter per a minute correspondingly has a small orifice, for example, of 0.1 mm or less.

An orifice having a small diameter cannot pass a foreign matter having a grain diameter larger than the diameter. The orifice is possibly clogged with the foreign matter and loses the function.

In light of the foregoing, Patent Literature 1 discloses that the art where an orifice using a long pipe is formed at the inside of a constant flow control valve in order to enlarge the diameter of the orifice. Further, the applicant has filed an application for an art where a lot of orifices are compactly contacted with each other in series at the inside of a constant flow control valve in order to enlarge the diameter of the orifice.

However, even the arts still have a problem in that a dust or a scale accumulates on the orifice depending on the water quality.

The art using a cleaning pin for cleaning an orifice as disclosed in Patent Literature 2 is effective in the above-mentioned problems.

However, in the art in Patent Literature 2, the clearance between the orifice and the cleaning pin inserted into the orifice is small when a small flow rate is controlled. The art has an effective structure in the removal of the accumulation. However, adversely, the clearance is increasingly clogged with a foreign matter.

Thus, the device in Patent Literature 2 has a structure where the cleaning pin is removed from the orifice by a spring force when passing water is stopped and the cleaning pin is inserted into the orifice again by the differential pressure of the flow to clean the orifice when the passing water is started again. This facilitates the removal of the clogging of the foreign matter even in the device of Patent Literature 2. However, as described in the Literature, such a structure causes the loss of the constant flow control function at a stage when the pressure of water supply is low or a stage before the cleaning pin is inserted into the orifice.

Further, in the case in which a orifice is used, to get the throttle efficiency, the orifice has a long orifice hole in order to keep a distance at the clearance with the cleaning pin in the flow direction and relies on the viscosity of the fluid and the resistance of the wall surface of the flow passage (in the case of the structure of Patent Literature 2). However, this gives a large temperature characteristic to the flow rate (Cv value) at the orifice because of the temperature characteristic of the fluid viscosity. It is very disadvantageous for an orifice of a constant flow control valve device. This causes the constant flow control performance as a function of a constant flow control valve device to largely depend on the temperature of the fluid.

In light of the foregoing, an objective of the present invention is to provide a constant flow control device for a small flow rate range that has the stability of the performance and a high reliability, and thus provide a constant flow control device that can improve the maintainability of the constant flow control device or implement a maintenance-free constant flow control device.

Solution to Problem

The problem is solved by the invention, as defined by independent claim 1.

In an arrangement the constant flow control device an orifice of the throttle portion may be placed on an axis that is a direction in which the needle valve can move, a cleaning pin is loosely inserted into the orifice, and a position of an end of the cleaning pin is axially limited by a cleaning pin receiving portion provided at the needle valve.

In an arrangement a cleaning pin may be loosely inserted into an orifice of the throttle portion and the position of an axial end of the cleaning pin is axially limited with a first housing and/or a second housing in the constant flow control device of the present invention.

In an arrangement in a constant flow control device a plurality of orifices having approximately same diameters may be coaxially placed at the throttle portion in series, an eddy chamber including a space having an internal diameter larger than internal diameters of the orifices is provided between the orifices and the cleaning pin is loosely inserted across the eddy chamber and the orifices on both sides of the eddy chamber.

In an arrangement the constant flow control device that controls a flow rate of fluid at a constant flow rate may include a first chamber that is formed with a first housing including an inlet into which fluid flows from an upstream fluid passage, a diaphragm, and a movable valve body integrally attached to the diaphragm; a second chamber that is formed with a second housing including an outlet communicated with a downstream fluid passage, the diaphragm, and the movable valve body; a throttle portion configured to communicate the first chamber with the second chamber and pass fluid in order to cause a difference of pressures between the first chamber and the second chamber; a valve seat provided in such a way as to face a passage communicating the second chamber with the downstream fluid passage, and provided in such a way as to correspond to a needle valve included in the movable valve body; and a main elastic member configured to bias the movable valve body in a direction in which the needle valve and the valve seat are separate by a predetermined elastic force, wherein a cleaning pin is loosely inserted into an orifice of the throttle portion, and the position of an axial end of the cleaning pin is axially limited with the first housing and/or the second housing.

In an arrangement the constant flow control device that controls a flow rate of fluid at a constant flow rate may include a first chamber that is formed with a first housing including an inlet into which fluid flows from an upstream fluid passage, a diaphragm, and a movable valve body integrally attached to the diaphragm; a second chamber that is formed with a second housing including an outlet communicated with a downstream fluid passage, the diaphragm, and the movable valve body; a throttle portion configured to communicate the first chamber with the second chamber and pass fluid in order to cause a difference of pressures between the first chamber and the second chamber; a valve seat provided in such a way as to face a passage communicating the second chamber with the downstream fluid passage, and provided in such a way as to correspond to a needle valve included in the movable valve body; and a main elastic member configured to bias the movable valve body in a direction in which the needle valve and the valve seat are separate by a predetermined elastic force, wherein a plurality of orifices having approximately the same diameters are coaxially placed at the throttle portion in series, an eddy chamber including a space having an internal diameter larger than internal diameters of the orifices is provided between the orifices, and the cleaning pin is loosely inserted across the eddy chamber and the orifices on both sides of the eddy chamber. Advantageous Effects of Invention

(1) Providing a forward-backward movable needle valve has the following effects (a) to (c).

(a) Wear, deformation and breaking of the needle valve or the valve seat caused by the repetitive collision of the needle valve with the valve seat are drastically reduced. The endurance performance of the repetitive action is dramatically improved.

(b) The needle valve can be prevented from being engaged in the valve seat.

(c) As the needle valve and the valve seat avoid concentrically receiving the stress that is generated when the "excess" of the differential pressure $\Delta P$ moves the movable valve body in a direction toward the valve seat and the needle valve touches down on the valve seat while a large differential pressure $\Delta P$ generates between a

first chamber and a second chamber, the needle valve moves backward so that a structurally strong part of the movable valve body having a large area or, namely, the movable valve body supporting portion in the second housing can disperse and receive the stress. This increases the reliability of the performance of the valve portion.

A throttle portion is formed by an incorporation of a component separate from the body of the movable valve into the body of the movable valve in the constant flow control device so that the end opposite to the needle valve of the needle valve elastic member is received by the throttle portion integrally fixed to the movable valve body. This has the following effects (a) to (f).

(a) The throttle portion as a separate part can be fixed at the movable valve body. Thus, the throttle portion is fixed near the entrance of the chamber of the movable valve body where the forward-backward movable needle valve is forward backward movably held so that the throttle portion can also be used as the receiving means of the needle valve elastic member.
In other words, only incorporating a throttle portion made from parts separate from the body of the movable valve body into the movable valve body can cause the incorporated throttle portion to exert two functions as a portion receiving an end side of the needle valve elastic member and as a throttle portion. This can cause the constant flow control device to have a rational structure.
Further, supporting the end opposite to the needle valve of the needle valve elastic member with the throttle portion provided at the movable valve body can cause the needle valve to forward backward movably be supported.
(b) The forward-backward movable needle valve is biased with the needle valve elastic member in a direction in which the needle valve projects from the movable valve body. Although such a forward-backward movable needle valve needs receiving means at the end opposite to the forward-backward movable needle valve of the needle valve elastic member that is biasing means, the above-mentioned structure can provide a simply-structured, compact and forward-backward movable needle valve type constant flow control device produced at a low cost.
(c) Attaching various types of throttle portions at a movable valve body can provide a constant flow control valve device that keeps a given flow rate at a low cost. This has a cost saving benefit.
(d) The throttle portion can be a compact and simple part that is not anisotropic. Thus, the size of the orifice diameter that requires a high accuracy can accurately be provided when the throttle portion is produced, for example, by injection-molding plastic.
(e) When the components of the throttle portion and the like are coaxially aligned on the central axis, each of the components does not have an orientation at right angles to the axis. Thus, the components are assembled regardless of the directions. This can simplify the assembly.
(f) Further, in the (e) case, there is no possibility of occurring an abnormal wear, rub, and catch between the cleaning pin and the orifice (hole) of the throttle portion during the operation because of the deviation of positional accuracy of the assembly.

In an arrangement the orifice of the throttle portion may be placed on the axis in a direction in which the needle valve can move. The cleaning pin is loosely inserted into the orifice. The position of an end of the cleaning pin is axially limited with a cleaning pin supporting portion provided at the needle valve. In an arrangement the cleaning pin may be received by the forward-backward movable needle valve. This has the following effects (a) to (e).

(a) When the forward-backward movable needle valve can move in the gap with the movable valve body, the operation for changing the relative position between the cleaning pin and the throttle portion can be performed.
(b) The forward-backward movable needle valve operates when the differential pressure $\Delta P$ exceeds a predetermined differential pressure prescribed by the main elastic member that is a main spring. If the cleaning pin operates at that time, the magnitude of the differential pressure increases the force of the operating cleaning pin for scraping off scale or the like. The inside surface of the orifice can be cleaned more efficiently.
(c) Simultaneously, when the forward-backward movable needle valve cannot move between the gap with the movable valve body, or in other words, when the flow rate is controlled at a constant flow rate, the relative position between the cleaning pin and the throttle portion is not forcedly changed. Thus, the possibility of occurring a wear, rub, catch, and the like between the cleaning pin and the movable valve body that are factors of the deviation of accuracy can be avoided and the movability of the movable valve body (the flow rate control) can accurately be controlled.
(d) Under a certain condition of use, the state is often shifted to the state under a constant flow control after the state has once come into the (b) state at the beginning of passing water (at the time when a water supply pressure is added). Thus, the state is shifted to the state under a highly accurate flow control as described in the (c) after the inside surface of the orifice has been cleaned in each use.
(e) The orifice of the throttle portion is placed on the axis in the direction in which the needle valve can move. Thus, coaxially placing the throttle portion, the cleaning pin, and the needle valve elastic member can implement a compact structure.

In an arrangement the constant flow control device of the present application, the cleaning pin may be loosely inserted into the orifice of the throttle portion. The position of the axial end of the cleaning pin is axially limited with the first housing or the second housing. In other words, the housing member limits the axial motion of the cleaning pin. This has the following effects (a) to (c).

(a) The housing member limits the axial motion of the cleaning pin and the movable valve body at which the throttle portion is fixed can move with the variation of the water supply pressure. This causes an operation for changing the relative position between the cleaning pin and the throttle portion during the use of the constant flow control valve device. This can surely and efficiently exert the function of cleaning the cleaning pin.
(b) Further, the position of the cleaning pin is not radially limited with the housing member. Accordingly, the cleaning pin freely moves in all direction at the inside of the orifice. This can cause the cleaning pin to efficiently clean the inside surface of the orifice.
(c) Further, if the cleaning pin is biased toward a position in the orifice hole, the gap between the inside wall surface of the orifice and the cleaning pin can partially be enlarged. The larger the gap is, the larger grain-diameter foreign matter can be discharged without clogging.

In an arrangement a plurality of orifices approximately having the same diameter may be coaxially placed at the throttle portion in series. An eddy chamber including a space having an internal diameter larger than the internal diameter of the orifice is provided between the orifices. A cleaning pin is loosely inserted across the eddy chamber and the orifices on both sides of the eddy chamber. This has the following effects (a) to (e).

(a) A cleaning pin is inserted across the eddy chamber and the orifices on both sides of the eddy chamber. Thus, the increased diameters of the orifices on both axial sides of the eddy chamber can prevent a foreign matter from clogging in a gap between the cleaning pin and the orifices. Thus, the cleaning pin can stably operate.
(b) The clearance between the orifice and cleaning pin that has been set at a very small size in order to control a small flow rate can be larger by placing a plurality of orifices in series and inserting a cleaning pin across them in comparison with the case with an orifice. This can decrease the possibility of clogging the clearance with a foreign matter having a grain diameter.
(c) It is found that, to exert the same throttle efficiency as the case with an orifice, the area of the clearance can be approximately $\sqrt{2}$ times larger than the case with an orifice in the case with two orifices, the area of the clearance can be approximately $\sqrt{3}$ times larger than the case with an orifice in the case with three orifices, and the area of the clearance can similarly be larger than the case with an orifice in the case with more orifices. As described above, the diameter of the orifice can be increased or the cleaning pin can be thinned by an area corresponding to the increase in the area of the clearance. Thus, the size of the clearance can be increased.
(d) Further, such a constant flow control valve device is often used with a strainer provided at the upstream side. The mesh size of the strainer to be used can be increased. This can reduce the cost of the mesh itself and improve the maintainability of the strainer because the strainer is less clogged in comparison with a strainer having a small mesh size. Further, an increased mesh size can contribute to the reduction in the pressure loss of the whole system using such a constant flow control valve.
(e) Further, according to the present invention, using a plurality of orifices efficiently exerts the throttle efficiency so that it is not necessary to extend the orifice in a longitudinal direction. Thus, the design where the influence from the viscosity of the throttle efficiency is reduced as much as possible can be implemented. This can implement a constant flow control valve device with a small temperature characteristic.

Brief Description of Drawings

Fig. 1 is a longitudinal sectional elevation view for illustrating a constant flow control device according to a first reference embodiment of the present application when a needle valve is isolated from a valve seat.
Figs. 2(a) and 2(b) are views for illustrating the constant flow control device according to the first reference embodiment of the present application. Fig. 2(a) is a longitudinal sectional elevation view for illustrating a state controlled at a constant flow rate while a circumferential part of the needle valve is contacted with a valve seat and slides, and Fig. 2(b) is a partially enlarged view thereof.
Fig. 3 is a longitudinal sectional elevation view for illustrating the constant flow control device according to the first reference embodiment of the present application when the needle valve is isolated from a movable valve body while the movable valve body is contacted with a second housing.

Fig. 4 is a partially longitudinal sectional, perspective view for resolving and illustrating the constant flow control device according to the first reference embodiment of the present application.

Fig. 5 is a longitudinal sectional elevation view for illustrating a constant flow control device according to a first embodiment of the present invention when a needle valve is isolated from a valve seat.

Figs. 6(a) and 6(b) are views for illustrating a constant flow control device according to the first embodiment of the present invention. Fig. 6(a) is a longitudinal sectional elevation view for illustrating a state controlled at a constant flow rate while a circumferential part of the needle valve is contacted with a valve seat and slides, and Fig. 6(b) is a partially enlarged view thereof.

Fig. 7 is a longitudinal sectional elevation view for illustrating the constant flow control device according to the first embodiment of the present invention when the needle valve is isolated from a movable valve body while the movable valve body is contacted with a second housing.

Fig. 8 is a partially longitudinal sectional, perspective view for resolving and illustrating the constant flow control device according to the first embodiment of the present invention.

Fig. 9 is a longitudinal sectional elevation view for illustrating a constant flow control device according to a second reference embodiment of the present application when a needle valve is isolated from a valve seat.

Fig. 10 is a longitudinal sectional elevation view for illustrating a constant flow control device according to a third reference embodiment of the present application when a needle valve is isolated from a valve seat.

Fig. 11 is a longitudinal sectional elevation view for illustrating the principle of a conventional constant flow control device.

Description of Embodiments

Next, the present invention will be described in detail based on the embodiments illustrated in the drawings.

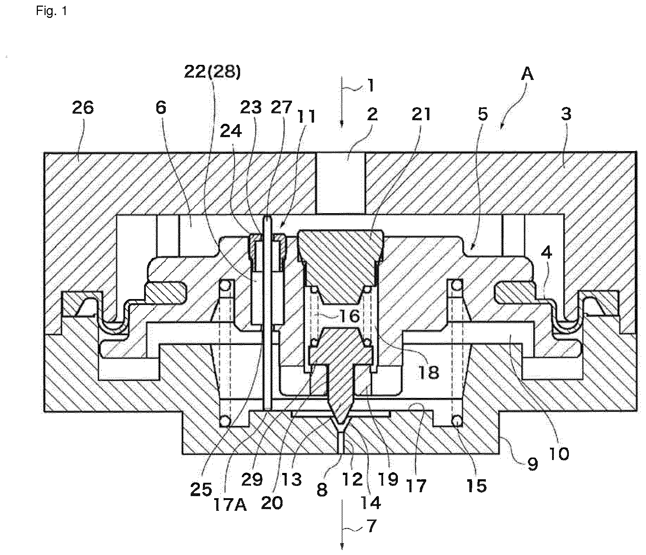

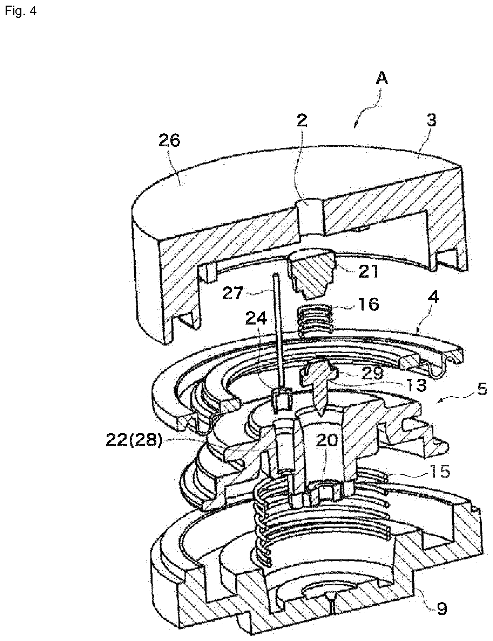

Figs. 1 to 4 illustrate a constant flow control device A according to a first reference embodiment of the present application.

A first chamber 6 is formed with a first housing 3 including an inlet 2 into which fluid flows from an upstream fluid passage 1, a diaphragm 4, and a movable valve body 5 integrally attached to the diaphragm 4.

A second chamber 10 is formed with a second housing 9 including an outlet 8 communicated with a downstream fluid passage 7, the diaphragm 4, and the movable valve body 5.

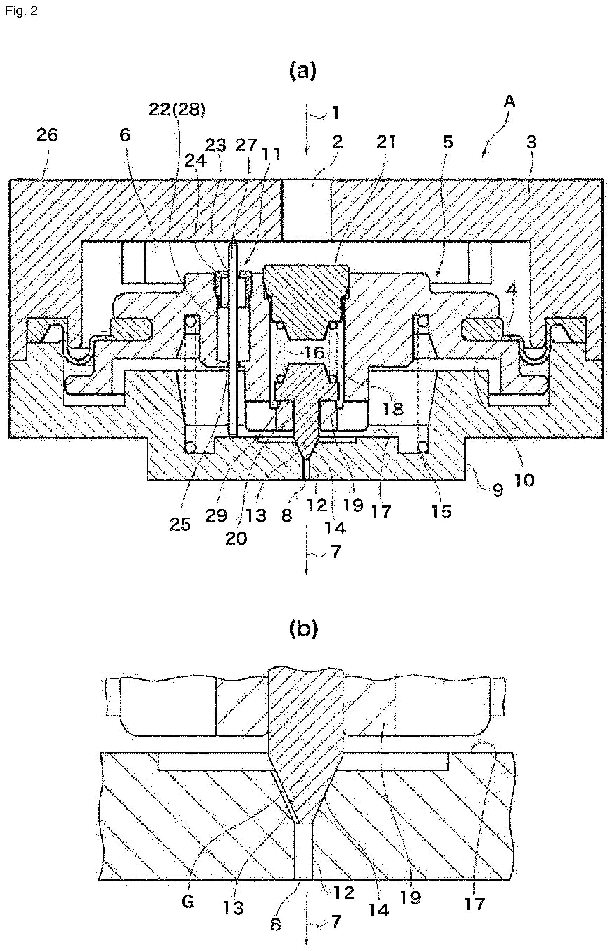

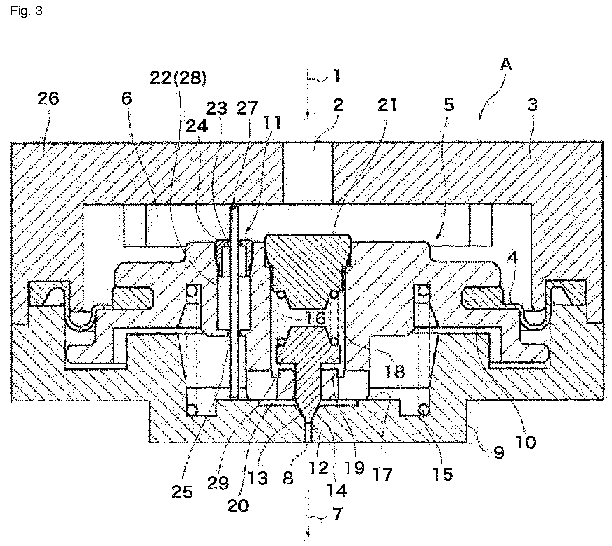

Fig. 1 is a longitudinal sectional elevation view for illustrating that a needle valve 13 is isolated from a valve seat 14 while the differential pressure between the first chamber 6 and the second chamber 10 is smaller than a predetermined differential pressure prescribed by the biasing force of a main elastic member 15 and the main elastic member 15 moves the movable valve body 5 to the first housing 3 side. In Figs. 2(a) and 2(b), the constant flow control device is controlled at a constant flow rate at which a small flow rate of fluid flows. Fig. 2(a) is a longitudinal sectional elevation view for illustrating a state controlled at a constant flow rate while a circumferential part of the needle valve 13 is contacted with a valve seat 14 and slides, and Fig. 2(b) is a partially enlarged view thereof. Fig. 3 is a longitudinal sectional elevation view for illustrating that the rapidly increased pressure on the first chamber 6 side causes the needle valve 13 to closely contact with and touch down on valve seat 14 and the needle valve 13 is isolated from the movable valve body while the movable valve body is contacted with a movable valve body receiving portion of the second housing.

The constant flow control device A according to the first reference embodiment includes the diaphragm 4 in which peripheral edge is held between the ends of the peripheral walls of the first housing 3 and the second housing 9, and includes the movable valve body 5 integrally attached to the diaphragm 4.

The movable valve body 5 can move forward or backward from the first chamber 6 side toward the second chamber 10 side in a housing formed with the first housing 3 and the second housing 9 and can slidably move while guided along the inner peripheral wall of the housing.

The inlet 2 of the first housing 3, the needle valve 13 provided at the movable valve body 5, the valve seat 14 provided at the second housing 9, a passage 12 connecting therewith and the outlet 8 are placed in such a way as to have the same central axis.

A concave portion 18 communicated with the second chamber 10 side is provided at the center of the movable valve body 5. A penetrating hole 20 is provided at a bottom 19 of the concave portion 18. A base end side shaft of the needle valve 13 is slidably engaged with the penetrating hole 20. The needle valve 13 is placed at, a needle valve elastic member 16 including a coil spring is stored in, and a lid 21 is fixed at the concave portion 18. The needle valve 13 is biased toward the bottom 19 of the concave portion 18 with the needle valve elastic member 16 so that the tip of the needle valve 13 is placed toward the valve seat 14 side while projecting axially outward from the bottom 19 of the concave portion 18 at the movable valve body 5.

As a way to fix lid 21 to the movable valve body 5, the lid 21 can be welded to the concave portion 18 of the

EP 2 639 482 B1

movable valve body 5, an internal screw hole is provided at the concave portion 18 and an external screw is provided at the outer periphery of the lid 21 such that the lid 21 can be screwed into and fixed to the concave portion 18, the lid 21 can be snapped, or the lid 21 can be pressed into the concave portion 18. For example, metal or synthetic resin can be used as the material of the lid 21 and the movable valve body 5.

The main elastic member 15 including a coil spring is provided between the movable valve body 5 and the second housing 9. The main elastic member 15 presses the movable valve body 5 toward the first chamber 6 side and moves the movable valve body 5 to a stopper (not illustrated in the drawings) included in the first housing 3 in such a way as to separate the needle valve 13 from the valve seat 14 in order to bias the needle valve 13 in a direction in which the valve opens.

A throttle portion 11, which generates a difference between the pressures of the first chamber 6 and the second chamber 10 by fluid passing through the first chamber 6 and the second chamber 10, is provided.

The throttle portion 11 is provided at the movable valve body 5 and is parallel to the needle valve 13. The throttle portion 11 includes a tubular lid 24 having a first chamber side orifice 23 fixed to an end of a small-diameter concave portion 22 provided on the first chamber 6 side of the movable valve body 5, a second chamber side orifice 25 provided at the bottom of the small-diameter concave portion 22, a cleaning pin 27 having a length enough to loosely be inserted and penetrate into both of the orifices, be adjacent to the inside surface of a top plate 26 of the first housing 3, and contact with a movable valve body receiving portion 17 provided on the periphery of the valve seat 14 of the second housing 9 and a cleaning pin receiving portion 17A provided on the same surface thereof and at the outside thereof. In other words, the cleaning pin 27 has an axial length slightly shorter than a distance from the inside surface of the top plate 26 to the cleaning pin receiving portion 17A on the second housing 9 side. Further, a circular eddy chamber 28 is included between the first chamber side orifice 23 and the second chamber side orifice 25.

The valve seat 14 faces the passage 12 communicating the second chamber 10 and the downstream fluid passage 7 and corresponds to the needle valve 13 provided at the movable valve body 5.

The main elastic member 15 including a coil spring engaged with the second housing 9 and the movable valve body 5 is a member for biasing the movable valve body 5, by a predetermined magnitude of elastic force, toward a direction in which the needle valve 13 and the valve seat 14 open the valve.

The needle valve 13 is held at the movable valve body 5 in such a way as to move forward and backward in the same direction as the direction in which the movable valve body 5 can move. Specifically, the needle valve elastic member 16 presses the needle valve 13 such that the needle valve 13 can move forward and the needle valve elastic member 16 is pressed and shortened such that the needle valve 13 can move backward. The motion of the needle valve 13 toward the valve seat 14 is stopped when a flange 29 of the needle valve 13 is supported at the bottom 19 of the concave portion 18 of the movable valve body 5 such that the motion of the needle valve 13 is limited at a predetermined position.

The throttle portion 11 is fixed to the movable valve body 5. The needle valve elastic member 16 biases the needle valve 13 in a direction toward the valve seat. The end opposite to the needle valve 13 of the needle valve elastic member 16 is received with the lid 21.

In the constant flow control device A, as illustrated in Fig. 2, once the differential pressure between the first chamber 6 and the second chamber 10 exceeds a predetermined differential pressure prescribed by the biasing force of a main elastic member 15, the movable valve body 5 and the needle valve 13 is pressed toward the second chamber side and move toward the valve seat 14, and a circumferential part of the needle valve 13 is contacted with and slidably moves to the valve seat 14 while throttling the flow such that the differential pressure between the first chamber 6 and the second chamber 10 becomes the predetermined differential pressure prescribed by the biasing force of the main elastic member 15. In other words, the constant flow control device A is controlled at a constant flow rate. As enlarged and illustrated in Fig. 2(b), a small gap G is formed between the needle valve 13 and the valve seat 14 in the circumferential direction of the needle valve 13. The small gap G controls the flow and the constant flow control device A is controlled at a constant flow rate. In this state, when the movable valve body 5 further moves toward the valve seat 14 side, the needle valve 13 moves backward such that the base end side of the needle valve 13 shortens the needle valve elastic member 16. Thus, the bottom surface (the surface on the second housing 9 side) of the bottom 19 of the movable valve body 5 can move forward until being contacted with the movable valve body receiving portion 17 provided at the second housing 9 as illustrated in Fig. 3.

In other words, when the differential pressure between the first chamber 6 and the second chamber 10 still exceeds the predetermined differential pressure prescribed by the biasing force of the main elastic member 15 even after the needle valve has been closed, the movable valve body 5 can move up to the movable valve body receiving portion 17 provided at the second housing 9 in a direction toward the valve seat such that the movable valve body receiving portion 17 receives the force of the excess in the differential pressure even after the needle valve 13 is closely contacted with and touches down on the valve seat 14. This causes the constant flow control device A to stably operate without engaging the needle valve in the valve seat 14 and being incapable of removing the needle valve from the valve seat 14.

8

In the constant flow rate control device A of the first reference embodiment, an end of the cleaning pin 27 is held between the first housing 3 and the second housing 9 such that the position of the cleaning pin 27 is axially limited and the cleaning pin 27 can move in radial directions of the orifices 23 and 25.

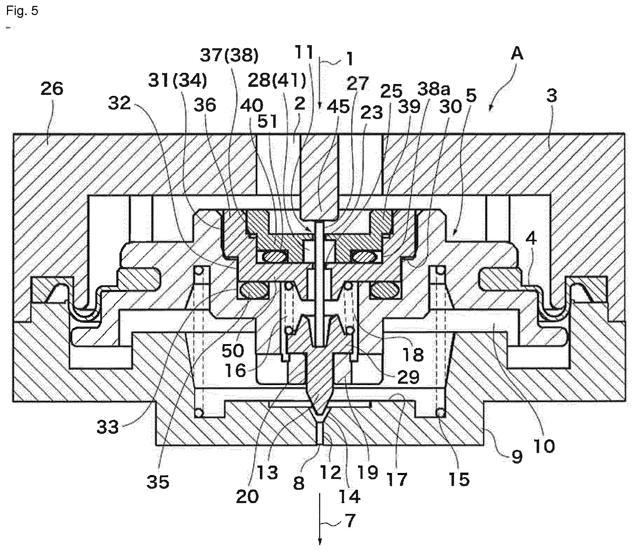

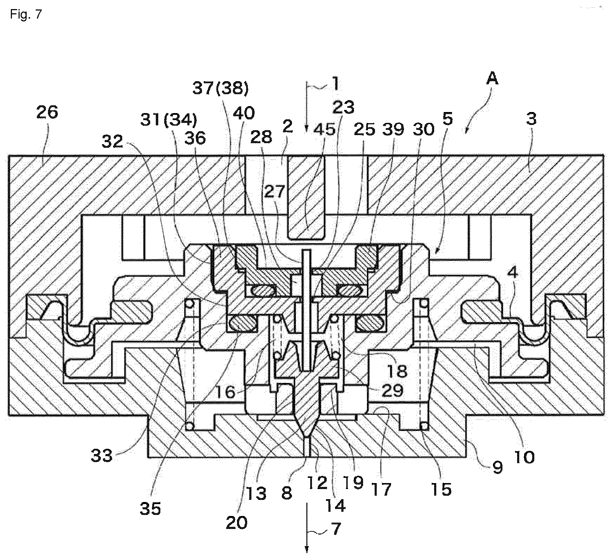

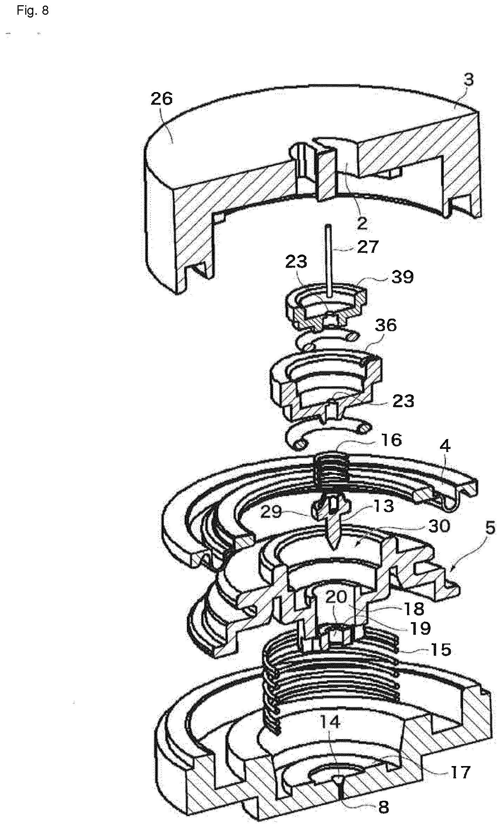

Figs. 5 to 8 illustrate the constant flow control device A according to the first embodiment of the present invention.

Figs. 5 to 7 are views of the states corresponding to Figs. 1 to 3 of the first reference embodiment, respectively.

The throttle portion 11 of the present embodiment has a form at which a plurality of orifices 23 and 25 having approximately the same diameters is coaxially placed in series. An eddy chamber 28 including a space having an internal diameter larger than the internal diameters of the orifices 23 and 25 is provided between the orifices 23 and 25 coaxially placed in series. A cleaning pin 27 is inserted across the eddy chamber 28 and the orifices 23 and 25 on both sides of the eddy chamber 28.

More specifically, a concave portion 30 with a plurality of steps (two steps in the drawing) caving from a first chamber 6 side toward a second chamber 10 side is formed at the center of the movable valve body 5. The stepped concave portion 30 includes a large-diameter concave portion 31 on the first chamber 6 side, a small-diameter concave portion 32 connecting with the large-diameter concave portion 31, and a circular groove 33 connecting with the small-diameter concave portion 32.

Similarly to the way to fix lid 21 to the movable valve body 5 in the above-mentioned embodiment, a large-diameter cap 36 fixed to the large-diameter concave portion 31 of the movable valve body 5 and a small-diameter cap 39 fixed to the large-diameter cap 36 are fixed to each other by a welding, a screw joint with an internal screw on the concave portion side and an external screw screwed into the internal screw, a snapping, or the like. For example, the screw joint can be performed as below.

An internal screw 34 is formed on the inside surface of the peripheral wall of the large-diameter concave portion 31. An O-ring 35 is fitted into and placed at the circular groove 33. An external screw of the large-diameter cap 36 having a bottom pressing the O-ring 35 is screwed into and fixed to the large-diameter concave portion 31.

A large-diameter concave portion 37 and a small-diameter concave portion 38a to be connected with the large-diameter concave portion 37 are formed at the inside of the large-diameter cap 36. An internal screw 38 is formed at the inside surface of the peripheral wall of the large-diameter concave portion 37 of the large-diameter cap 36.

The external screw of the small-diameter cap 39 is screwed into and fixed to the internal screw 38 of the large-diameter cap 36. The orifice 23 is formed on the first chamber 6 side of a bottom 40 of the small-diameter cap 39. A concave portion 41 having a diameter larger than the diameter of the orifice 23 is formed on the reverse surface (the reverse surface on the second chamber 10 side) of the bottom 40 including the orifice 23. The second chamber 10 side surface (the same surface as the reverse surface of the bottom 40) of the bottom 40 of the small-diameter cap 39 is contacted with the first chamber 6 side surface of a bottom 50 of the large-diameter cap 36 and thus the eddy chamber 28 is formed with the concave portion 41. The O-ring is pressed and intervenes between the bottom 50 of the large-diameter cap 36 and the second chamber side surface of a circular step 51 provided on the periphery of the second chamber 10 side surface of the bottom 40 of the small-diameter cap 39.

The orifice 23 placed on the first chamber side is formed at the center of the bottom 40 of the small-diameter cap 39. The cleaning pin 27 is placed across the orifice 25 of the large-diameter cap 36 and the orifice 23 of the small-diameter cap 39. An end of the cleaning pin 27 is loosely fitted into a tapered concave portion provided at the needle valve 13. The other end of the cleaning pin 27 is set at a position where the other end approaches a supporting convex portion 45 projecting from the top plate 26 of the first housing 3 to the first chamber side in the state illustrated in Fig. 5 (when the differential pressure between the first chamber 6 and the second chamber 10 is smaller than a predetermined differential pressure prescribed by the biasing force of the main elastic member 15 and thus the main elastic member 15 is moved to the first chamber 6 side).

The large-diameter cap 36, the small-diameter cap 39, the needle valve 13, and the cleaning pin 27 are coaxially placed. The needle valve elastic member 16 including a coil spring intervenes between the large-diameter cap 36 and flange 29 of the needle valve 13 in such a way as to constantly press the needle valve 13 to the upper surface of the bottom 19 of the concave portion 18 at the movable valve body 5.

In the present embodiment, the throttle portion 11 includes the orifice 23 of the small-diameter cap 39, the orifice 25 of the large-diameter cap 36, the eddy chamber 28 formed between the orifices, and the cleaning pin 27 inserted and placed across the orifices and the eddy chamber.

In the present embodiment, the large-diameter cap 36 with the orifice 25 and the small-diameter cap 39 with the orifice 23 are parts separate from the movable valve body 5. For example, the diameter and length of the orifice 25 of the large-diameter cap 36, the diameter and length of the orifice 23 of the small-diameter cap 39, and the diameter of the cleaning pin are variously changed such that the throttle portion 11 can variously be formed with the orifices and the cleaning pin. Exchanging such various types of the throttle portions 11 can provide a constant flow control valve device having a given flow rate. This can fulfill various requests on the settings including the flow rate at a low cost and thus can give a cost benefit.

The other components are the same as those in the above-mentioned reference embodiment and thus the same elements are denoted with the same reference signs.

Although the large-diameter cap 36 with the orifice 25 and the small-diameter cap 39 with the orifice 23 are coaxially placed in series in the first embodiment, a medium-diameter cap with an orifice can properly intervene between the large-diameter cap 36 and the small-diameter cap 39.

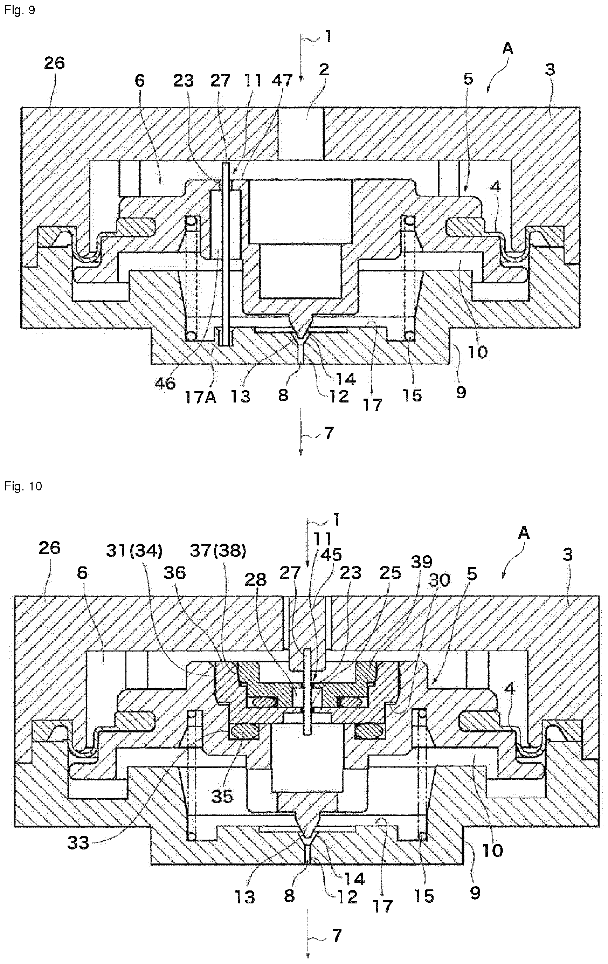

Fig. 9 illustrates a constant flow control device A according to a second reference embodiment of the present application.

The second reference embodiment illustrated in Fig. 9 differs from the first reference embodiment illustrated in Fig. 1 in that the lid 21 and the needle valve elastic member 16 in the embodiment of Fig. 1 are omitted, a needle valve 13 is integrally provided at a movable valve body 5, and a bottom 19 is not provided with an opening in the embodiment of Fig. 9.

Further, the tubular lid 24 and the second chamber side orifice 25 are omitted from a throttle portion 11 provided at the movable valve body 5, the movable valve body 5 is provided with a concave portion 46 opening on a second chamber 10 side, an upper surface plate 47 is integrated with the movable valve body 5 and is provided at the first chamber side end of the concave portion 46 in an axial direction, and a first chamber side orifice 23 is provided on the upper surface plate 47.

The cleaning pin 27 is loosely fitted to and inserted into the first chamber side orifice 23. Similarly to the first embodiment, the cleaning pin 27 has a length slightly shorter than a distance between the inside surface of a top plate 26 of the first housing 3 and the cleaning pin receiving portion 17A that is a tapered concave portion provided on the periphery of the valve seat 14 at the second housing 9.

The parts except for the above-mentioned parts are the same as those in the first reference embodiment and thus the same parts are denoted with the same reference signs.

In the present embodiment, the main elastic member 15 biases the needle valve 13 toward a direction in which the valve opens through the movable valve body 5. Once the differential pressure between the first chamber 6 and the second chamber 10 exceeds a predetermined differential pressure prescribed by the biasing force of the main elastic member 15, the movable valve body 5 and the needle valve 13 are pressed toward the second chamber side and move toward the valve seat 14, and a circumferential part of the needle valve 13 is contacted with and slidably moves to the valve seat 14 while throttling the flow such that the differential pressure between the first chamber 6 and the second chamber 10 becomes the predetermined differential pressure prescribed by the biasing force of a main elastic member 15. In other words, the constant flow control device A is controlled at a constant flow rate. Similarly to the state illustrated in Fig. 2B, a small gap is formed between the valve seat 14 and the needle valve 13 in the circumferential direction of the needle valve 13. The small gap controls the flow and the constant flow control device A is controlled at a constant flow rate.

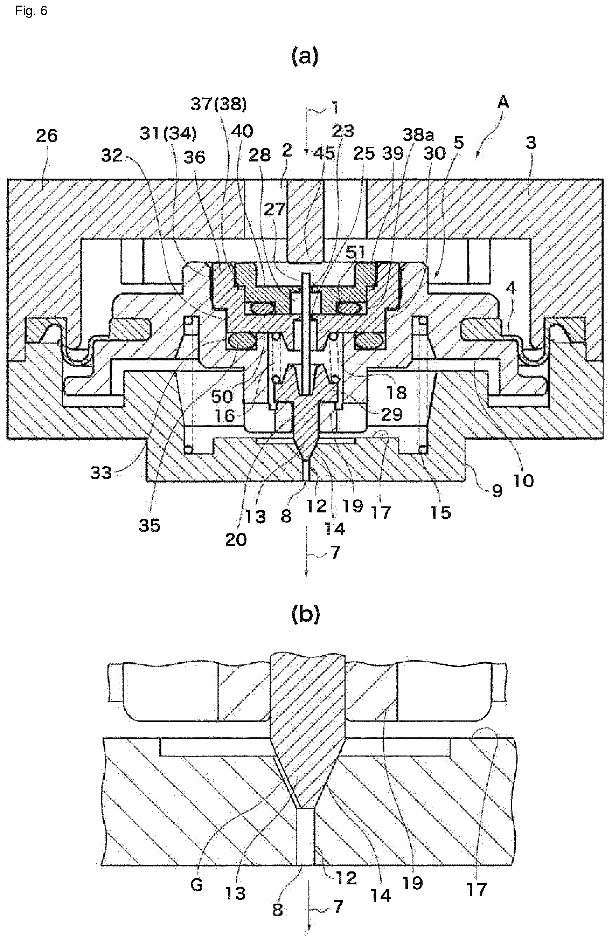

Fig. 9 illustrates the state when the differential pressure between the first chamber 6 and the second chamber 10 is smaller than a predetermined differential pressure prescribed by the biasing force of the main elastic member 15 and the main elastic member 15 moves the movable valve body 5 to the first chamber 6 side. Similarly to the state illustrated in Figs. 2(a) or 6(b), the constant flow control device is controlled at a constant flow rate while a small flow rate of fluid flows.

The present embodiment has a reduced frequency of the rapid increase in the water supply pressure and is applicable when the flow rate (Cv value) of fluid from the first chamber 6 to the second chamber 10 is relatively large (in other words, when the fluid is relatively smoothly and fast supplied from the first chamber 6 to the second chamber 10). The present embodiment can be produced with a few components at a low cost because having a simple structure.

The parts except for the above-mentioned parts are the same as those in the first reference embodiment and thus the same parts are denoted with the same reference signs.

Fig. 10 illustrates a constant flow control device A according to a third reference embodiment of the present application.

The third reference embodiment illustrated in Fig. 10 differs from the first embodiment illustrated in Fig. 5 in that the needle valve elastic member 16 in the embodiment of Fig. 5 is omitted and the needle valve 13 is integrally provided at the movable valve body 5 in the embodiment of Fig. 10.

Further, the cleaning pin 27 is shortened. An end of the cleaning pin 27 is fixed to a concave portion, an internal screw or the like provided at a supporting convex portion 45 provided at the first housing 3, for example, by a press, a screwing, or a welding. The other end of the cleaning pin 27 is a free end and is placed in the concave portion 18 of the movable valve body 5. Omitting the needle valve elastic member 16 removes a frustum-shaped convex portion provided at the large-diameter cap 36 for supporting the end from the large-diameter cap 36 and causes the convex portion to be a flat surface.

Similarly to each of the above-mentioned embodiments, the main elastic member 15 biases the needle valve 13 toward a direction in which the valve opens through the movable valve body 5 in the present embodiment. Once the differential pressure between the first chamber 6 and the second chamber 10 exceeds a predetermined differential pressure prescribed by the biasing force of a main elastic member 15, the movable valve body 5 and the needle valve 13 are pressed toward the second chamber side and move toward the valve seat 14, and a circumferential part of the needle valve 13 is contacted with and slidably moves to the valve seat 14 while throttling the flow such that the differential pressure between the first chamber 6 and the second chamber 10 becomes the predetermined differential pressure prescribed by the biasing force of the main elastic member 15. In other words, the constant flow control device A is controlled at a constant flow rate. Similarly to the state illustrated in Fig. 6(b), a small gap is formed between the valve seat 14 and the needle valve 13 in the circumferential direction of the needle valve 13. The small gap controls the flow and the constant flow control device A is controlled at a constant flow rate.

The parts except for the above-mentioned parts are the same as those in the first embodiment and thus the same parts are denoted with the same reference signs.

Fig. 10 illustrates the state when the differential pressure between the first chamber 6 and the second chamber 10 is smaller than a predetermined differential pressure prescribed by the biasing force of the main elastic member 15 and the main elastic member 15 moves the movable valve body 5 to the first chamber 6 side. Similarly to the state illustrated in Figs. 2(b) or 6(b), the constant flow control device is controlled at a constant flow rate while a small flow rate of fluid flows.

The present embodiment has a reduced frequency of the rapid increase in the water supply pressure and is applicable when the flow rate (Cv value) of fluid from the first chamber 6 to the second chamber 10 is relatively large (in other words, when the fluid is relatively smoothly and fast supplied from the first chamber 6 to the second chamber 10). The present embodiment can be produced with a few components at a low cost because having a simple structure.

Reference Signs List

| | |
|---|---|
| 1 | Upstream fluid passage |
| 2 | Inlet |
| 3 | First housing |
| 4 | Diaphragm |
| 5 | Movable valve body |
| 6 | First chamber |
| 7 | Downstream fluid passage |
| 8 | Outlet |
| 9 | Second housing |
| 10 | Second chamber |
| 11 | Throttle portion |
| 12 | Passage |
| 13 | Needle valve |
| 14 | Valve seat |
| 15 | Main elastic member |
| 16 | Needle valve elastic member |
| 17 | Movable valve body receiving portion |
| 17A | Cleaning pin receiving portion |
| 18 | Concave portion |
| 19 | Bottom |
| 20 | Penetrating hole |
| 21 | Lid |
| 22 | Small-diameter concave portion |
| 23 | First chamber side orifice |
| 24 | Tubular lid |
| 25 | Second chamber side orifice |
| 26 | Top plate |
| 27 | Cleaning pin |
| 28 | Eddy chamber |
| 29 | Flange |
| 30 | Stepped concave portion |
| 31 | Large-diameter concave portion |
| 32 | Small-diameter concave portion |
| 33 | Circular groove |
| 34 | Internal screw |

35 O-ring
36 Large-diameter cap
37 Large-diameter concave portion
38 Internal screw
38a Small-diameter concave portion
39 Small-diameter cap
40 Bottom
41 Concave portion
45 Supporting convex portion
46 Concave portion
47 Upper surface plate
50 Bottom
51 Circular step

**Claims**

1. A constant flow control device that controls a flow rate of fluid at a predetermined flow rate comprising:

   a diaphragm (4),
   a first chamber (6) that is formed by a first housing (3) including an inlet (2) into which fluid flows from an upstream fluid passage (1), and by a movable valve body (5) integrally attached to the diaphragm (4), wherein an upper part of the movable valve body (5) is opposed to the first housing (3),
   a second chamber (10) that is formed by a second housing (9) including an outlet (8) communicating with a downstream fluid passage (7), and by the movable valve body (5), wherein the lower part of the movable valve body (5) is opposed to the second housing (9);
   a throttle portion (11) configured to communicate the first chamber (6) with the second chamber (10) and pass fluid in order to cause a difference of pressures between the first chamber (6) and the second chamber (10);
   a valve seat (14) provided in such a way as to face a passage communicating the second chamber (10) with the downstream fluid passage (7), and provided in such a way as to correspond to a needle valve (13) included in the movable valve body (5); and
   a main elastic member configured to bias the movable valve body (5) in a direction in which the needle valve (13) and the valve seat (14) open by a predetermined elastic force **characterized in that**,
   wherein the needle valve (13) is held at the movable valve body (5) in such a way as to move forward and backward in a same direction as a direction in which the movable valve body (5) can move, and a motion of the needle valve (13) in a direction toward the valve seat (14) is limited at a predetermined position of the movable valve body (5),
   the throttle portion (11) is provided at the movable valve body (5),
   a needle valve elastic member (16) provided at the movable valve body (5) biases the needle valve (13) in a direction toward the valve seat (14),
   when a differential pressure between the first chamber (6) and the second chamber (10) exceeds a predetermined differential pressure prescribed by a biasing force of the main elastic member, the movable valve body (5) can move to a movable valve body receiving portion (17) included in the second housing (9) in the direction toward the valve seat (14) and is received by the movable valve body receiving portion (17) while the needle valve (13) is closely contacted with and touches down on the valve seat (14), such that the movable valve body receiving portion (17) receives a force of an excess in the differential pressure,
   the throttle portion (11) is formed such that a component separate from a body of the movable valve body (5) is incorporated in the body of the movable valve body (5),
   a concave portion communicated with the second chamber (10) is provided at the movable valve body (5),
   a base end side shaft of the needle valve (13) is slidably incorporated in a bottom of the concave portion provided at the movable valve body (5), and
   an end opposite to the needle valve (13) of the needle valve elastic member (16) is received by the throttle portion (11) integrally fixed to a first chamber (6) side of the concave portion of the movable valve body (5).

2. The constant flow control device according to claim 1,
   wherein an orifice of the throttle portion (11) is placed on an axis that is a direction in which the needle valve (13) can move,
   a cleaning pin (27) is loosely inserted into the orifice, and

a position of an end of the cleaning pin (27) is axially limited by a cleaning pin receiving portion (17A) provided at the needle valve (13).

3. The constant flow control device according to claim 1 or 2,
wherein a plurality of orifices having approximately same diameters are coaxially placed at the throttle portion (11) in series,
an eddy chamber (28) including a space having an internal diameter larger than internal diameters of the orifices is provided between the orifices and the cleaning pin (27) is loosely inserted across the eddy chamber (28) and the orifices on both sides of the eddy chamber (28).

**Patentansprüche**

1. Steuervorrichtung für konstanten Durchfluss, die eine Durchflussrate von Fluid bei einer vorbestimmten Durchflussrate steuert, umfassend:

eine Membran (4),
eine erste Kammer (6), die durch ein erstes Gehäuse (3), beinhaltend einen Einlass (2), in den Fluid aus einem stromaufwärts gelegenen Fluidkanal (1) fließt, und durch einen beweglichen Ventilkörper (5), der integral an der Membran (4) befestigt ist, gebildet ist, wobei ein oberer Teil des beweglichen Ventilkörpers (5) dem ersten Gehäuse (3) gegenüber liegt,
eine zweite Kammer (10), die durch ein zweites Gehäuse (9), beinhaltend einen Auslass (8), der mit einem stromabwärts gelegenen Fluidkanal (7) verbunden ist, und durch den beweglichen Ventilkörper (5) gebildet ist, wobei der untere Teil des beweglichen Ventilkörpers (5) dem zweiten Gehäuse (9) gegenüber liegt;
einen Drosselabschnitt (11), der dazu konfiguriert ist, die erste Kammer (6) mit der zweiten Kammer (10) zu verbinden und Fluid weiterzuleiten, um einen Druckunterschied zwischen der ersten Kammer (6) und der zweiten Kammer (10) zu verursachen;
einen Ventilsitz (14), der auf eine solche Weise bereitgestellt ist, dass er einem Kanal gegenübersteht, der die zweite Kammer (10) mit dem stromabwärts gelegenen Fluidkanal (7) verbindet, und der auf eine solche Weise bereitgestellt ist, dass er einem Nadelventil (13) entspricht, das in dem beweglichen Ventilkörper (5) enthalten ist; und
ein elastisches Hauptelement, das dazu konfiguriert ist, den beweglichen Ventilkörper (5) in einer Richtung vorzuspannen, in der sich das Nadelventil (13) und der Ventilsitz (14) mit einer vorbestimmten elastischen Kraft öffnen, **dadurch gekennzeichnet, dass**,
das Nadelventil (13) auf eine solche Weise an dem beweglichen Ventilkörper (5) gehalten wird, dass es sich in einer gleichen Richtung wie eine Richtung, in der sich der bewegliche Ventilkörper (5) bewegen kann, vor und zurück bewegt, und eine Bewegung des Nadelventils (13) in einer Richtung zu dem Ventilsitz (14) an einer vorbestimmten Position des beweglichen Ventilkörpers (5) beschränkt ist,
der Drosselabschnitt (11) an dem beweglichen Ventilkörper (5) bereitgestellt ist,
ein elastisches Nadelventilelement (16), das an dem beweglichen Ventilkörper (5) bereitgestellt ist, das Nadelventil (13) in einer Richtung zu dem Ventilsitz (14) vorspannt,
wenn ein Differentialdruck zwischen der ersten Kammer (6) und der zweiten Kammer (10) einen vorbestimmten Differentialdruck, der durch eine Vorspannkraft des elastischen Hauptelements vorgegeben ist, übersteigt, sich der bewegliche Ventilkörper (5) zu einem in dem zweiten Gehäuse (9) enthaltenen Aufnahmeabschnitt (17) des beweglichen Ventilkörpers in der Richtung zu dem Ventilsitz (14) bewegen kann und durch den Aufnahmeabschnitt (17) des beweglichen Ventilkörpers aufgenommen wird, während das Nadelventil (13) in engem Kontakt mit dem Ventilsitz (14) steht und auf diesem aufsitzt, sodass der Aufnahmeabschnitt (17) des beweglichen Ventilkörpers eine Kraft von einem Überschuss in dem Differentialdruck aufnimmt,
der Drosselabschnitt (11) so geformt ist, dass eine von einem Körper des beweglichen Ventilkörpers (5) separate Komponente in dem Körper des beweglichen Ventilkörpers (5) integriert ist,
ein konkaver Abschnitt, der mit der zweiten Kammer (10) verbunden ist, an dem beweglichen Ventilkörper (5) bereitgestellt ist,
ein Basis-Endseitenschaft des Nadelventils (13) verschiebbar in einen Boden des konkaven Abschnitts, der an dem beweglichen Ventilkörper (5) bereitgestellt ist, integriert ist, und
ein Ende gegenüber dem Nadelventil (13) des elastischen Nadelventilelements (16) durch den Drosselabschnitt (11), der integral an einer Seite der ersten Kammer (6) des konkaven Abschnitts des beweglichen Ventilkörpers (5) befestigt ist, aufgenommen wird.

**2.** Steuervorrichtung für konstanten Durchfluss nach Anspruch 1,
wobei eine Öffnung des Drosselabschnitts (11) an einer Achse platziert ist, die in einer Richtung liegt, in der sich das Nadelventil (13) bewegen kann,
ein Reinigungsstift (27) locker in die Öffnung eingeführt ist, und
eine Position eines Endes des Reinigungsstifts (27) durch einen Aufnahmeabschnitt (17A) des Reinigungsstifts, der an dem Nadelventil (13) bereitgestellt ist, axial beschränkt ist.

**3.** Steuervorrichtung für konstanten Durchfluss nach Anspruch 1 oder 2,
wobei eine Vielzahl von Öffnungen mit ungefähr gleichen Durchmessern an dem Drosselabschnitt (11) in Reihe koaxial platziert ist,
eine Wirbelkammer (28), beinhaltend einen Raum mit einem Innendurchmesser größer als Innendurchmesser der Öffnungen, zwischen den Öffnungen bereitgestellt ist und der Reinigungsstift (27) über die Wirbelkammer (28) und die Öffnungen an beiden Seiten der Wirbelkammer (28) locker eingeführt ist.

**Revendications**

**1.** Dispositif de commande d'écoulement constant qui commande un débit
de fluide à un débit prédéfini comprenant :

un diaphragme (4),
une première chambre (6) qui est formée par un premier logement (3) comprenant une entrée (2) dans laquelle un fluide s'écoule à partir d'un passage de fluide en amont (1) et par un corps de vanne mobile (5) fixé intégralement au diaphragme (4), une partie supérieure du corps de vanne mobile (5) étant opposée au premier logement (3),
une seconde chambre (10) qui est formée par un second logement (9), comprenant une sortie (8) communiquant avec un passage de fluide en aval (7) et par le corps de vanne mobile (5), ladite partie inférieure du corps de vanne mobile (5) étant opposée au second logement (9) ;
une partie d'étranglement (11) configurée pour faire communiquer la première chambre (6) avec la seconde chambre (10) et passer un fluide afin d'entraîner un différence de pression entre la première chambre (6) et la seconde chambre (10) ;
un siège de vanne (14) disposé de telle façon qu'il fasse face au passage faisant communiquer la seconde chambre (10) avec le passage de fluide en aval (7) et disposé de telle façon qu'il corresponde à un pointeau (13) compris dans le corps de vanne mobile (5) ; et
un élément élastique principal configuré pour solliciter le corps de vanne mobile (5) selon la direction dans laquelle le pointeau (13) et le siège de vanne (14) s'ouvre par une force élastique prédéfinie **caractérisé en ce que**,
ledit pointeau (13) est tenu au niveau du corps de vanne mobile (5) d'une façon telle qu'il se déplace vers l'avant et vers l'arrière dans la même direction que la direction dans laquelle le corps de vanne mobile (5) peut se déplacer et un déplacement du pointeau (13) selon une direction vers le siège de vanne (14) étant limité au niveau d'une position prédéfinie du corps de vanne mobile (5),
la partie d'étranglement (11) étant disposée au niveau du corps de vanne mobile (5),
un élément élastique de pointeau (16) disposé au niveau du corps de vanne mobile (5) sollicitant le pointeau (13) selon une direction vers le siège de vanne (14),
lorsqu'une différence de pression entre la première chambre (6) et la seconde chambre (10) est supérieure à une différence de pression prédéfinie déterminée par une force de sollicitation de l'élément élastique principal, le corps de vanne mobile (5) peut se déplacer à une partie (17) recevant le corps de vanne mobile comprise dans le second logement (9) selon la direction vers le siège de vanne (14) et est reçue par la partie (17) recevant le corps de vanne mobile tandis que le pointeau (13) est étroitement mis en contact avec le siège de vanne (14) et atterri sur celui-ci, de sorte que la partie (17) recevant le corps de vanne mobile reçoive une force de la différence de pression excédentaire,
la partie d'étranglement (11) étant formée de sorte qu'un composant distinct d'un corps du corps de vanne mobile (5) soit incorporé dans le corps du corps de vanne mobile (5),
une partie concave communiquant avec la seconde chambre (10) est disposée au niveau du corps de vanne mobile (5),
un arbre latéral d'extrémité de base du pointeau (13) étant incorporé de façon coulissante dans une partie inférieure de la partie concave disposée au niveau du corps de vanne mobile (5), et
une extrémité opposée au pointeau (13) de l'élément élastique de pointeau (16) étant reçue par la partie d'étranglement (11) fixée intégralement à un côté de la première chambre (6) de la partie concave du corps de vanne mobile (5).

2. Dispositif de commande d'écoulement constant selon la revendication 1,
   un orifice de la partie d'étranglement (11) étant placé sur un axe qui est la direction suivant laquelle le pointeau (13) peut se déplacer,
   une broche de nettoyage (27) étant insérée lâchement dans l'orifice, et
   une position d'une extrémité de la broche de nettoyage (27) étant axialement limitée par une partie (17A) recevant la broche de nettoyage au niveau du pointeau (13).

3. Dispositif de commande d'écoulement constant selon la revendication 1 ou 2,
   une pluralité d'orifices possédant environ les mêmes diamètres étant coaxialement placés au niveau de la partie d'étranglement (11) en série,
   une chambre à tourbillon (28) comprenant un espace possédant un diamètre interne supérieur aux diamètres internes des orifices étant disposée entre les orifices et ladite broche de nettoyage (27) étant insérée lâchement à travers la chambre à tourbillon (28) et les orifices des deux côtés de la chambre à tourbillon (28).

EP 2 639 482 B1

Fig. 1

Fig. 2

**(a)**

**(b)**

Fig. 3

Fig. 4

Fig. 5

Fig. 6

**(a)**

**(b)**

Fig. 7

Fig. 8

Fig. 9

Fig. 10

Fig. 11

**EP 2 639 482 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010013412 A
- JP 2008232196 A
- JP 8249069 A